Europäisches Patentamt

European Patent Office

Office européen des brevets

(19)

(11) EP 1 526 736 A1

(12) EUROPEAN PATENT APPLICATION

(43) Date of publication:
27.04.2005 Bulletin 2005/17

(51) Int Cl.⁷: H04N 7/26

(21) Application number: 04024434.5

(22) Date of filing: 13.10.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 20.10.2003 US 512708 P

(71) Applicant: Broadcom Corporation
Irvine, California 92618-7013 (US)

(72) Inventors:
• Chang, Li Fung
Holmdel NY 07733 (US)

• Hahm, Mark
Irvine, CA 92618-7013 (US)
• Pan, Weiping
Irvine, CA 92618-7013 (US)
• Suen, Ruei Shiang
Irvine, CA 92618-7013 (US)

(74) Representative: Jehle, Volker Armin, Dipl.-Ing.
Patentanwälte
Bosch, Graf von Stosch, Jehle,
Flüggenstrasse 13
80639 München (DE)

(54) **Wireless device having a distinct hardware video accelerator to support video compression and decompression**

(57) A video processor within a wireless terminal, that includes a video interface that receives incoming video information and that provides outgoing video information, a processing module operably coupled to the video interface, and a video accelerator module and a motion processing co-processor operably coupled to the processing module. The processing of the incoming video information and the outgoing video information is performed by the combination of the processing module, co-processor and the video accelerator module. Compute intensive operations may be offloaded from the processing module onto the video accelerator to improve overall system efficiency.

EP 1 526 736 A1

FIG. 10

FIG. 12

video processing module 916

Motion co-processor
928

Half Pixel Interpolation
Motion Compensation

encoded video
data 924

ARM  918

Bit Stream formating
VLC/RLC decoding
unzig-zag scan operations
Zig-Zag Scan

unencoded
video data 946

post processing
operations 910

accelerator module 920

IQUAN operations
IDCT operations

**Description**

**Cross References to Related Applications**

This application claims priority to U.S. Provisional Patent Application Serial No. 60/512,708, filed October 20,, 2003, which is incorporated herein by reference for all purposes.

**BACKGROUND**

**1. Technical Field**

The present invention relates generally to cellular wireless communication systems, and more particularly to a distinct hardware video accelerator component to support video compression and decompression within a wireless terminal of a cellular wireless communication system.

**2. Related Art**

Cellular wireless communication systems support wireless communication services in many populated areas of the world. While cellular wireless communication systems were initially constructed to service voice communications, they are now called upon to support data and video (multimedia) communications as well. The demand for video and data communication services has exploded with the acceptance and widespread use video capable wireless terminals and the Internet. Video and data communications have historically been serviced via wired connections; cellular wireless users now demand that their wireless units also support video and data communications. The demand for wireless communication system video and data communications will only increase with time. Thus, cellular wireless communication systems are currently being created/modified to service these burgeoning demands.

Cellular wireless networks include a "network infrastructure" that wirelessly communicates with wireless terminals within a respective service coverage area. The network infrastructure typically includes a plurality of base stations dispersed throughout the service coverage area, each of which supports wireless communications within a respective cell (or set of sectors). The base stations couple to base station controllers (BSCs), with each BSC serving a plurality of base stations. Each BSC couples to a mobile switching center (MSC). Each BSC also typically directly or indirectly couples to the Internet.

In operation, each base station communicates with a plurality of wireless terminals operating in its cell/sectors. A BSC coupled to the base station routes voice, video, data or multimedia communications between the MSC and a serving base station. The MSC then routes these communications to another MSC or to the PSTN. Typically, BSCs route data communications between a servicing base station and a packet data network that may include or couple to the Internet. Transmissions from base stations to wireless terminals are referred to as "forward link" transmissions while transmissions from wireless terminals to base stations are referred to as "reverse link" transmissions. The volume of data transmitted on the forward link typically exceeds the volume of data transmitted on the reverse link. Such is the case because data users typically issue commands to request data from data sources, e.g., web servers, and the web servers provide the data to the wireless terminals. The great number of wireless terminals communicating with a single base station forces the need to divide the forward and reverse link transmission times amongst the various wireless terminals.

Wireless links between base stations and their serviced wireless terminals typically operate according to one (or more) of a plurality of operating standards. These operating standards define the manner in which the wireless link may be allocated, setup, serviced and torn down. One popular cellular standard is the Global System for Mobile telecommunications (GSM) standard. The GSM standard, or simply GSM, is predominant in Europe and is in use around the globe. While GSM originally serviced only voice communications, it has been modified to also service data communications. GSM General Packet Radio Service (GPRS) operations and the Enhanced Data rates for GSM (or Global) Evolution (EDGE) operations coexist with GSM by sharing the channel bandwidth, slot structure, and slot timing of the GSM standard. GPRS operations and EDGE operations may also serve as migration paths for other standards as well, e.g., IS-136 and Pacific Digital Cellular (PDC).

The GSM standard specifies communications in a time divided format (in multiple channels). The GSM standard specifies a 4.615 ms frame that includes 8 slots of, each including eight slots of approximately 577 μs in duration. Each slot corresponds to a Radio Frequency (RF) burst. A normal RF burst, used to transmit information, typically includes a left side, a midamble, and a right side. The midamble typically contains a training sequence whose exact configuration depends on modulation format used. However, other types of RF bursts are known to those skilled in the art. Each set of four bursts on the forward link carry a partial link layer data block, a full link layer data block, or multiple link layer data blocks. Also included in these four bursts is control information intended for not only the wireless terminal for which the data block is intended but for other wireless terminals as well.

GPRS and EDGE include multiple coding/puncturing schemes and multiple modulation formats, e.g., Gaussian Minimum Shift Keying (GMSK) modulation or Eight Phase Shift Keying (8PSK) modulation. Particular coding/puncturing schemes and modulation formats used at any time depend upon the quality of a servicing forward link channel, e.g., Signal-to-Noise-Ratio (SNR) or Signal-to-Interference-Ratio (SIR) of the channel, Bit Error Rate of the channel, Block Error Rate of the channel, etc. As multiple modulation formats may be used for any RF burst, wireless communication systems require significant processing ability to encode and decode the information contained within the RF bursts. This decision may be further influenced by changing radio conditions and the desired quality level to be associated with the communications.

Video coding standards typically provide video representation in the form of a sequence of rectangular two-dimensional frames. As software is becoming increasingly more powerful with improved microelectronic technologies providing new programmable processors, additional functionalities may be added. These include the application of multimedia content or visual information in a mobile connection. Already today wireless terminals are not limited to only voice communications. Other types of data including real time multimedia may be provided. The need for visual communication is much stronger when using a mobile wireless device utilized in multiple environments. This reinforces the relevance of audiovisual communications in a mobile environment. Users want access to this audiovisual information in real time. This requires that the multimedia be of acceptable quality at low enough rates to be effectively communicated in the cellular wireless environment. The motion picture expert group (MPEG) standard addresses these emerging needs. These standards include standards such as MPEG 4 and MPEG 7 which specify a way of describing various types of multimedia information, including still pictures, video, speech, audio, graphics, 3D models, and synthetic audio and video. The MPEG 4 standard was conceived with the objective of obtaining significantly better compression ratios than could be achieved by conventional coding techniques. However, to achieve low data rates often requires computer intense coding schemes.

These improved coding and decoding efficiencies creates ever-growing demands on the processor within the wireless environment. Unlike a desktop computer coupled to a network via a landline connection a mobile wireless terminal will have a limited data rate between itself and the servicing base station. Additionally, the processors within the wireless terminal are assigned multiple processing duties. The increased coding and decoding associated with video standards such as MPEG 4 require additional processing power in order to maintain real time audio/visual communications. The addition of these processing requirements within the wireless terminal requires new methods with which to balance the processing requirements of the system processor while maintaining these real time audio/visual communications.

**BRIEF SUMMARY OF THE INVENTION**

In order to overcome the shortcomings of prior devices, the present invention provides a system and method of processing video data that utilizes a distinct hardware video accelerator to support video compression and decompression within a wireless device. More specifically, one embodiment of the present invention provides a system for implementing video coding and decoding operations within a wireless terminal. This system includes a video interface that receives incoming video information and provides outgoing video information, a processor, optimally coupled to the video interface and a video processor accelerator optimally coupled to the processor. The video processor accelerator and processor jointly share the processing of incoming video information and outgoing video information. For example, the video processor accelerator may handle compute intensive algorithms such as fast discreet cosine transformation (FDCT) operations, quantization (QUAN) operations, inverse quantization (IQUAN), and inverse discreet cosine transform (IDCT) operations. Additionally, either the processor or video processor accelerator may also perform motion compensation operations, zigzag operations, run length coding/variable length coding (RLC/VLC) operations, and bit stream formatting.

Another embodiment provides a wireless terminal that utilizes a distinct hardware video accelerator to support video compression and decompression operations. This wireless terminal includes a radio frequency (RF) front end, a baseband and/or system processor, a video input device with which to capture or receive incoming video information, a video display device with which video information is presented, a video interface and a video processing system. The video processing system may further include a processing module, coupled to the video interface, wherein the processing module may in fact be a dedicated portion of the baseband or system processor utilized for video processing, and a video accelerator module operably coupled to the processing module to share video data processing responsibility.

Yet another embodiment of the present invention provides a method by which video or multimedia information is processed within a wireless terminal. This method involves receiving video information at a video processing engine wherein either the video information is to be captured or displayed. Next, the mode of operation of the video processing engine is determined. Based on this mode of operation, the processing of the video information will be divided between a processing module and a dedicated video accelerator module wherein the video accelerator module is configured based on the mode of operation.

According to an aspect of the invention, a video processor within a wireless terminal is provided, comprising:

a video interface that receives incoming video information and that provides outgoing video information;
a processing module operably coupled to the video interface;
a video accelerator operably coupled to the processing module;
a motion processing co-processor operably coupled to the processing module; and

wherein processing of the incoming video information and the outgoing video information is performed by the combination of the processing module, video co-processor and the video accelerator module.

Advantageously, the motion co-processor performs Sum of Absolute Difference (SAD) operations, half-pixel interpolation, motion compensation, motion separation between interframes when encoding video information.

Advantageously, the motion co-processor performs half-pixel interpolation and motion compensation when decoding video information.

Advantageously, the video accelerator module, when encoding video information, performs:

Fast Discrete Cosine Transform (FDCT) operations;
Quantization (QUAN) operations;
Inverse Quantization (IQUAN) operations; and
Inverse Discrete Cosine Transform (IDCT) operations.

Advantageously, the video accelerator module, when decoding video information, performs:

Inverse Quantization (IQUAN) operations; and
Inverse Discrete Cosine Transform (IDCT) operations.

Advantageously, the processing module performs:

zig-zag operations;
Un-zig-zag operations;
Run Length Coding/Variable Length Coding (RLC/VLC) operations;
VLC/RLC decoding operations; and
Bit stream formatting operations.

Advantageously, a mode of operation of the video accelerator module is directed by a control interface operably coupled to the video accelerator module.

Advantageously, the mode of operation comprises either a decode mode or an encode mode.

Advantageously, the control interface comprises:

a configuration register operably coupled to the processing module, wherein a state of the configuration register defines the mode of operation of the video accelerator module;
a buffer setup register; and
a buffer access register.

Advantageously, states of the buffer setup register define an address and format of data received by and outputted from the video accelerator module.

Advantageously, the video accelerator module writes/reads data to/from the buffer access register.

Advantageously, the format of data received by and outputted from the video accelerator module comprise:

MPEG 4;
MPEG 4 with an H.263 quantization scheme; or
JPEG.

Advantageously, the wireless terminal operates according to the GSM standard.

According to an aspect of the invention, a wireless terminal comprises:

a Radio Frequency (RF) front end;

a baseband processor communicatively coupled to the RF front end;
a video input device to capture incoming video information;
a video display device to display outgoing video information;
a video interface that receives incoming video information and that provides outgoing video information; and
a video processor that further comprises:

a processing module operably coupled to the video interface;
a motion co-processor operably coupled to the processing module;
a video accelerator module operably coupled to the processing module; and

wherein processing of the incoming video information and the outgoing video information is performed by the combination of the processing module, motion co-processor and video accelerator module.

Advantageously, the motion co-processor performs Sum of Absolute Difference (SAD) operations, half-pixel interpolation, motion compensation, motion separation between interframes when encoding video information.

Advantageously, the motion co-processor performs half-pixel interpolation and motion compensation when decoding video information.

Advantageously, the video accelerator module, when encoding video information, performs:

Fast Discrete Cosine Transform (FDCT) operations;
Quantization (QUAN) operations;
Inverse Quantization (IQUAN) operations; and
Inverse Discrete Cosine Transform (IDCT) operations.

Advantageously, the video accelerator module, when decoding video information, performs:

Inverse Quantization (IQUAN) operations; and
Inverse Discrete Cosine Transform (IDCT) operations.

Advantageously, the processing module performs:

zig-zag operations;
Un-zig-zag operations;
Run Length Coding/Variable Length Coding (RLC/VLC) operations;
VLC/RLC decoding operations; and
Bit stream formatting operations.

Advantageously, a mode of operation of the video accelerator module is directed by a control interface operably coupled to the video accelerator module.

Advantageously, the mode of operation comprises either a decode mode or an encode mode.

Advantageously, the video interface performs pre-processing functions and post-processing functions.

Advantageously, the format of data received by and outputted from the video accelerator module comprise:

MPEG 4;
MPEG 4 with an H.263 quantization scheme; or
JPEG.

Advantageously, the wireless terminal operates according to the GSM standard.

According to an aspect of the invention, a method to process video information within a wireless terminal comprises:

receiving video information at a video processing engine;
determining a mode of operation of the video processing engine from a format of the video operation; and
dividing the processing of the video information between a processing module, motion co-processor and a video accelerator module.

Advantageously, the motion co-processor performs Sum of Absolute Difference (SAD) operations, half-pixel interpolation, motion compensation, motion separation between interframes when encoding video information.

Advantageously, the motion co-processor performs half-pixel interpolation and motion compensation when decoding video information.

Advantageously, the video accelerator module, when encoding video information, performs:

Fast Discrete Cosine Transform (FDCT) operations;
Quantization (QUAN) operations;
Inverse Quantization (IQUAN) operations; and
Inverse Discrete Cosine Transform (IDCT) operations.

Advantageously, the video accelerator module, when decoding video information, performs:

Inverse Quantization (IQUAN) operations; and
Inverse Discrete Cosine Transform (IDCT) operations.

Advantageously, the processing module performs:

zig-zag operations;
Un-zig-zag operations;
Run Length Coding/Variable Length Coding (RLC/VLC) operations;
VLC/RLC decoding operations; and
Bit stream formatting operations.

Advantageously, the format of video information received by and outputted from the video processing engine comprise:

MPEG 4;
MPEG 4 with an H.263 quantization scheme; or
JPEG.

Advantageously, the wireless terminal operates according to the GSM standard.
Other features and advantages of the present invention will become apparent from the following detailed description of the invention made with reference to the accompanying drawings.

**BRIEF DESCRIPTION OF THE DRAWINGS**

FIG. 1 is a system diagram illustrating a portion of a cellular wireless communication system that supports wireless terminals operating according to the present invention;
FIG. 2 is a block diagram functionally illustrating a wireless terminal constructed according to the present invention;
FIG. 3 is a block diagram illustrating in more detail the wireless terminal of FIG. 2, with particular emphasis on the digital processing components of the wireless terminal;
FIG. 4 is a block diagram illustrating the general structure of a GSM frame and the manner in which data blocks are carried by the GSM frame;
FIG. 5 is a block diagram illustrating the formation of down link transmissions;
FIG. 6 is a block diagram illustrating the recovery of a data block from a down link transmissions;
FIG. 7 is a flow chart illustrating operation of a wireless terminal in receiving and processing a RF burst;
FIG. 8 is a flow chart illustrating operations to recover a data block;
FIG. 9 provides a functional block diagram of a video processing core engine;
FIG. 10 provides a functional block diagram of a video processing module within a wireless terminal;
FIG. 11 provides a block diagram depicting the division of labor within the video processing module to encode the video data;
FIG. 12 provides a functional block diagram illustrating the various operations and the division of labor of those operations within a video encoder;
FIG. 13 provides a block diagram depicting the division of labor to decode video data within a video processing module;
FIG. 14 provides a block diagram of the data structure or potential data structure utilized by video information discussed within the present invention;
FIG. 15 provides a diagram depicting the sequence of operations and division of labor to decode and encoded video data within a video processor of the present invention;

FIG. 16 provides a logical flow diagram indicating the control of process flows between the video processor and accelerator when encoding MPEG4 data;

FIG. 17 provides a logical flow diagram indicating the control of process flows between the video processor and accelerator when decoding MPEG4 data;

FIG. 18 provides a logical flow diagram indicating the control of process flows between the video processor and accelerator when encoding MPEG4 data with H.263 quantization; and

FIG. 19 provides a logical flow diagram indicating the control of process flows between the video processor and accelerator when decoding MPEG4 data with H.263 quantization.

## DETAILED DESCRIPTION OF THE DRAWINGS

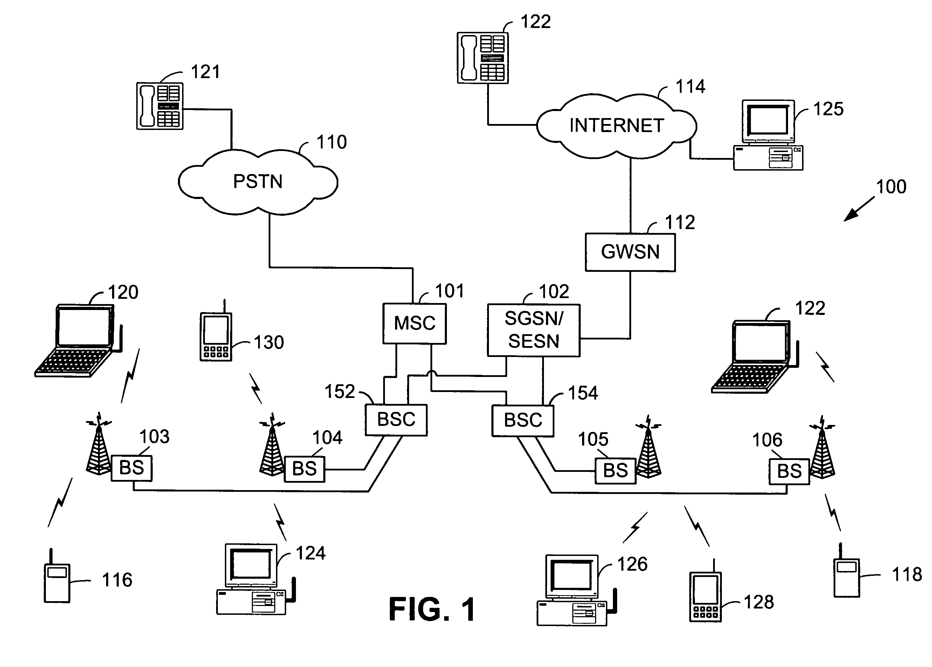

FIG. 1 is a system diagram illustrating a portion of a cellular wireless communication system 100 that supports wireless terminals operating according to the present invention. The cellular wireless communication system 100 includes a Mobile Switching Center (MSC) 101, Serving GPRS Support Node/Serving EDGE Support Node (SGSN/SESN) 102, base station controllers (BSCs) 152 and 154, and base stations 103, 104, 105, and 106. The SGSN/SESN 102 couples to the Internet 114 via a GPRS Gateway Support Node (GGSN) 112. A conventional multimedia capable terminal 121 couples to the PSTN 110. Multimedia capable terminal 123 and a personal computer 125 couple to the Internet 114. The MSC 101 couples to the Public Switched Telephone Network (PSTN) 110.

Each of the base stations 103-106 services a cell/set of sectors within which it supports wireless communications. Wireless links that include both forward link components and reverse link components support wireless communications between the base stations and their serviced wireless terminals. These wireless links support digital voice, video, multimedia, and data communications. The cellular wireless communication system 100 may also be backward compatible in supporting analog operations as well. The cellular wireless communication system 100 supports the Global System for Mobile telecommunications (GSM) standard and also the Enhanced Data rates for GSM (or Global) Evolution (EDGE) extension thereof. The cellular wireless communication system 100 may also support the GSM General Packet Radio Service (GPRS) extension to GSM. However, the present invention is also applicable to other standards as well, e.g., TDMA standards, CDMA standards, etc.

Wireless terminals 116, 118, 120, 122, 124, 126, 128, and 130 couple to the cellular wireless communication system 100 via wireless links with the base stations 103-106. As illustrated, wireless terminals may include video and multimedia capable cellular telephones 116 and 118, laptop computers 120 and 122, desktop computers 124 and 126, and data terminals 128 and 130. However, the wireless system supports communications with other types of wireless terminals as known to those skilled in the art as well. As is generally known, devices such as laptop computers 120 and 122, desktop computers 124 and 126, data terminals 128 and 130, and cellular telephones 116 and 118, are enabled to "surf" the Internet 114, transmit and receive data, audio and video communications. Many of these data operations have significant download data-rate (forward link) requirements and upload data-rate (reverse link) requirements in order to support video and multimedia communications. Some or all of the wireless terminals 116-130 are therefore enabled to support the EDGE operating standard, the GSM standard and may support the GPRS standard.

Wireless terminals 116-130 support the pipelined processing of received RF bursts in slots of a GSM frame so that a plurality of slots in each sub-frame of a GSM frame are allocated for forward link transmissions to a single wireless terminal. In one embodiment, a number of slots of a GSM frame are allocated for forward link transmissions to a wireless terminal such that the wireless terminal must receive and process a number of RF bursts, e.g., 2, 3, 4, or more RF bursts, in each GSM frame. The wireless terminal is able to process the RF bursts contained in these slots and still service reverse link transmissions and the other processing requirements of the wireless terminal.

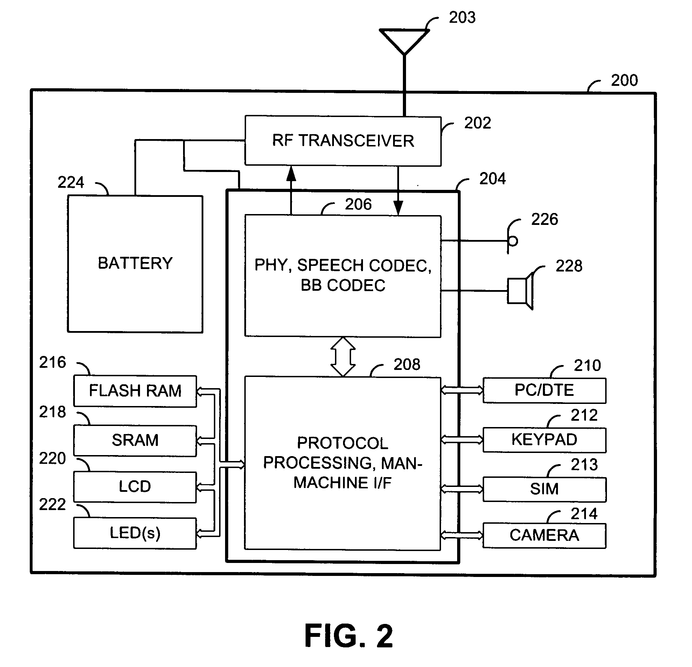

FIG. 2 is a block diagram functionally illustrating a wireless terminal 200 constructed according to the present invention. The wireless terminal 200 of FIG. 2 includes an RF transceiver 202, digital processing components 204, and various other components contained within a case. The digital processing components 204 includes two main functional components, a physical layer processing, speech COder/DECoder (CODEC), and baseband CODEC functional block 206 and a protocol processing, man-machine interface functional block 208. A Digital Signal Processor (DSP) is the major component of the physical layer processing, speech COder/DECoder (CODEC), and baseband CODEC functional block 206 while a microprocessor, e.g., Reduced Instruction Set Computing (RISC) processor, is the major component of the protocol processing, man-machine interface functional block 208. The DSP may also be referred to as a Radio Interface Processor (RIP) while the RISC processor may be referred to as a system processor. However, these naming conventions are not to be taken as limiting the functions of these components.

The RF transceiver 202 couples to an antenna 203, to the digital processing components 204, and also to a battery 224 that powers all components of the wireless terminal 200. The physical layer processing, speech COder/DECoder (CODEC), and baseband CODEC functional block 206 couples to the protocol processing, man-machine interface functional block 208 and to a coupled microphone 226 and speaker 228. The protocol processing, man-machine interface functional block 208 couples to a Personal Computing/Data Terminal Equipment interface 210, a keypad 212, a Subscriber Identification Module (SIM) port 213, a camera 214, a flash RAM 216, an SRAM 218, a LCD 220, and LED(s) 222. The camera 214 and LCD 220 may support either/both still pictures and moving pictures. Thus, the wireless terminal 200 of FIG. 2 supports video services as well as audio services via the cellular network.

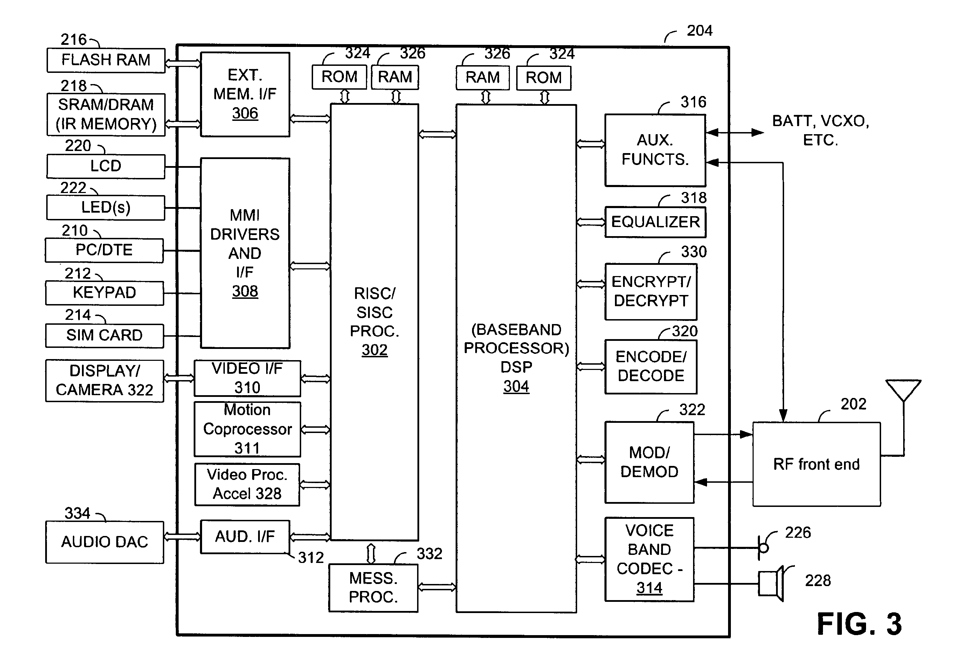

FIG. 3 is a block diagram illustrating in more detail the wireless terminal of FIG. 2, with particular emphasis on the digital processing components of the wireless terminal. The digital processing components 204 include a system processor 302, a baseband processor 304, and a plurality of supporting components. The supporting components include an external memory interface 306, MMI drivers and I/F 308, a video I/F 310, a motion co-processor 311, an audio I/F 312, a voice band CODEC 314, auxiliary functions 316, a modulator/demodulator 322, ROM 324, RAM 326 and a plurality of processing modules. In some embodiments, the modulator/demodulator 322 is not a separate structural component with these functions being performed internal to the baseband processor 304.

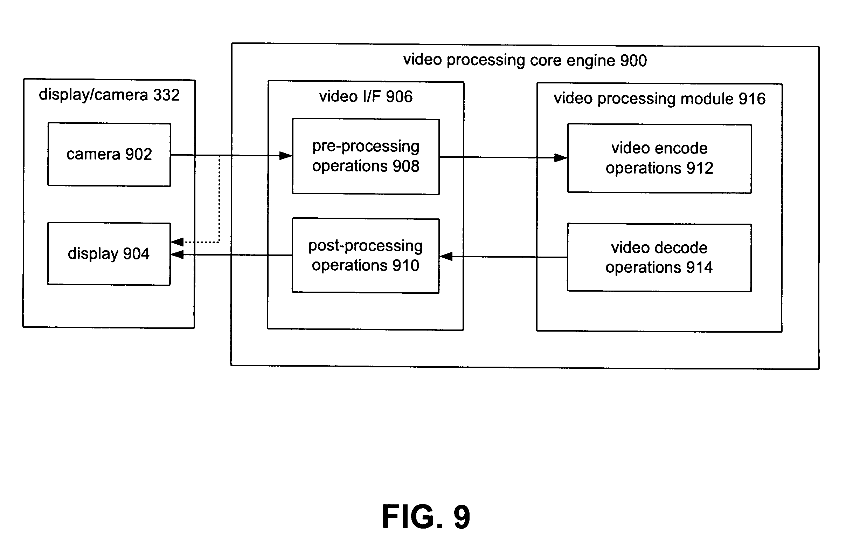

The processing modules are also referred to herein as accelerators, co-processors, processing modules, or otherwise, and include auxiliary functions 316, an equalizer module 318, an enCOder/DECoder (CODEC) processing module 320, and a video process accelerator module 328. The interconnections of FIG. 3 are one example of a manner in which these components may be interconnected. Other embodiments support additional/alternate couplings. Such coupling may be direct, indirect, and/or may be via one or more intermediary components. The video processing accelerator 328, the motion co-processor 319, and operations of the DSP 304 in processing video data will be described in more detail with reference to FIGs. 9-21.

RAM and ROM service both the system processor 302 and the baseband processor 304. Both the system processor 302 and the baseband processor 304 may couple to shared RAM 326 and ROM 324, couple to separate RAM, coupled to separate ROM, couple to multiple RAM blocks, some shared, some not shared, or may be served in a differing manner by the memory. In one particular embodiment, the system processor 302 and the baseband processor 304 coupled to respective separate RAMs and ROMs and also couple to a shared RAM that services control and data transfers between the devices. The processing modules 316, 318, 320, 322, and 328 may coupled as illustrated in FIG. 3 but may also coupled in other manners in differing embodiments.

The system processor 302 services at least a portion of a serviced protocol stack, e.g., GSM/GPRS/EDGE protocol stack. The baseband processor 304 in combination with the modulator/demodulator 322, RF transceiver, equalizer module 318, and/or encoder/decoder module 320 service the Physical Layer (PHY) operations performed by the digital processing components 204. The baseband processor 304 may also services a portion of the GSM/GPRS/EDGE protocol stack.

Still referring to FIG. 3, the baseband processor 304 controls the interaction of the baseband processor 304 and equalizer module 318. As will be described further, the baseband processor 304 is responsible for causing the equalizer module 318 and the CODEC processing module 320 to process received RF bursts that reside within slots of a GSM frame. In the particular embodiment of FIGs. 2 and 3, with single RF front end 202, wireless terminal 200 may receive and process RF bursts in up to four slots of each GSM frame, i.e., be assigned four slots for forward link transmissions in any particular GSM frame. In another embodiment in which the wireless terminal 200 includes more than one RF front end, the wireless terminal 200 may be assigned more than four slots in each sub-frame of the GSM frame. In this case, required transmit operations would be performed using a second RF front end while a first RF front end would perform the receive operations. When the forward link transmissions and the reverse link transmissions occupy different channels with sufficient frequency separation, and the wireless terminal otherwise supports full duplex operations, the wireless terminal could receive and transmit at the same time.

The combination of the RF front end 202, and base band processor 204, which may include an optional CODEC processing module, receive RF communications that may contain both audio and visual information from the servicing base station. In one embodiment the RF front end 202 and base band processor 204 receive and process RF bursts from servicing base stations. The combination of RF front end 202 and base band processor 204 are operable to receive RF bursts transmitted according to a transmission scheme wherein the transmission scheme includes both a modulation format and a coding format. Base band processor 204 to produce a data block decodes sequences of soft decisions, extracted from the RF bursts. The sequence of soft decisions may decode successfully into the data block as indicated by error correction coding results.

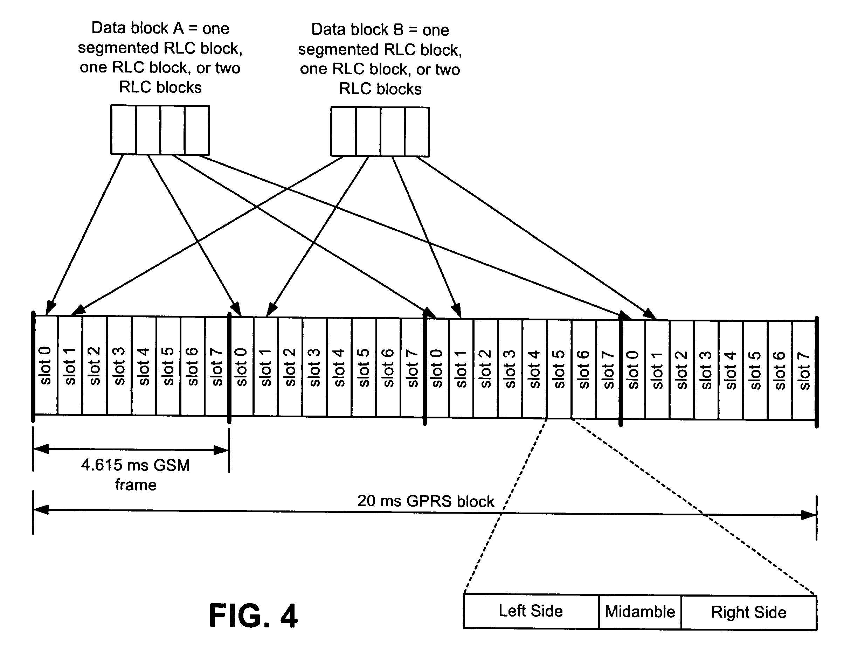

FIG. 4 is a block diagram illustrating the general structure of a GSM frame and the manner in which data blocks that may contain audio, video, and data communications, are carried by the GSM frame. The GSM frame is 4.615 ms in duration, including guard periods, and each of which includes eight slots, slots 0 through 7. Each slot is approximately 577 μs in duration, includes a left side, a midamble, and a right side. The left side and right side of a normal RF burst of the time slot carry data while the midamble is a training sequence.

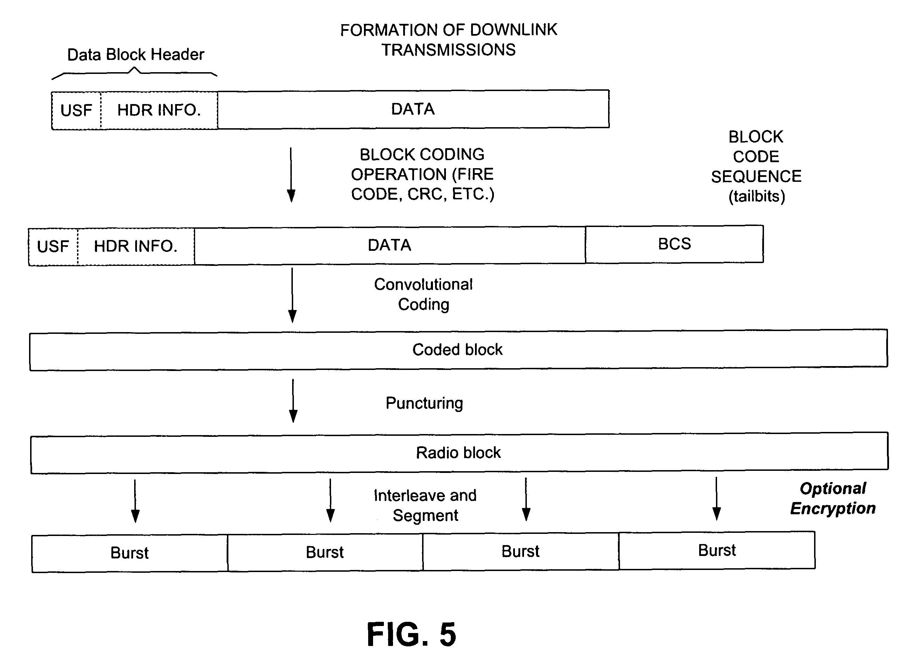

The RF bursts of four time slots of the GPRS block carry a segmented RLC block, a complete RLC block, or two RLC blocks, depending upon a supported Modulation and Coding Scheme (MCS) mode. For example, data block A is carried in slot 0 of sub-frame 1, slot 0 of sub-frame 2, slot 0 of sub-frame 3, and slot 0 of sub-frame 3. Data block A may carry a segmented RLC block, an RLC block, or two RLC blocks. Likewise, data block B is carried in slot 1 of sub-frame 1, slot 1 of sub-frame 2, slot 1 of sub-frame 3, and slot 1 of sub-frame 3. The MCS mode of each set of slots, i.e., slot n of each sub-frame, for the GSM frame is consistent for the GSM frame. Further, the MCS mode of differing sets of slots of the GSM frame, e.g., slot 0 of each sub-frame vs. any of slots 1-7 of each sub-frame, may differ. This ability allows LA to be implemented. As will be described further with reference to FIG. 5, the wireless terminal 200 may be assigned multiple slots for forward link transmissions that must be received and processed by the wireless terminal 200.

FIG. 5 depicts the various stages associated with mapping data into RF bursts. A Data Block Header and Data are initially unencoded. The block coding operations perform the outer coding for the data block and support error detection/correction for data block. The outer coding operations typically employ a cyclic redundancy check (CRC) or a Fire Code. The outer coding operations are illustrated to add tail bits and/or a Block Code Sequence (BCS), which is/are appended to the Data. After block coding has supplemented the Data with redundancy bits for error detection, calculation of additional redundancy for error correction to correct the transmissions caused by the radio channels. The internal error correction or coding scheme of GSM is based on convolutional codes.

Some coded bits generated by the convolutional encoder are punctured prior to transmission. Puncturing increases the rate of the convolutional code and reduces the redundancy per data block transmitted. Puncturing additionally lowers the bandwidth requirements such that the convolutional encoded signal fits into the available channel bit stream. The convolutional encoded punctured bits are passed to an interleaver, which shuffles various bit streams and segments the interleaved bit streams into the 4 bursts shown.

Each RF burst has a left side, a midamble, and a right side. The left side and right side contain data. The midamble consists of predefined, known bit patterns, the training sequences, which are used for channel estimation to optimize reception with an equalizer and for synchronization. With the help of these training sequences, the equalizer eliminates or reduces the intersymbol interferences, which can be caused by propagation time differences of multipath propagation. A number of training sequences are defined for normal RF bursts in the GSM standard. However, the exact configuration of the training sequences may depend on the modulation format used. Each set of four bursts typically utilizes the same modulation format. By analyzing the training sequence one can determine the modulation format.

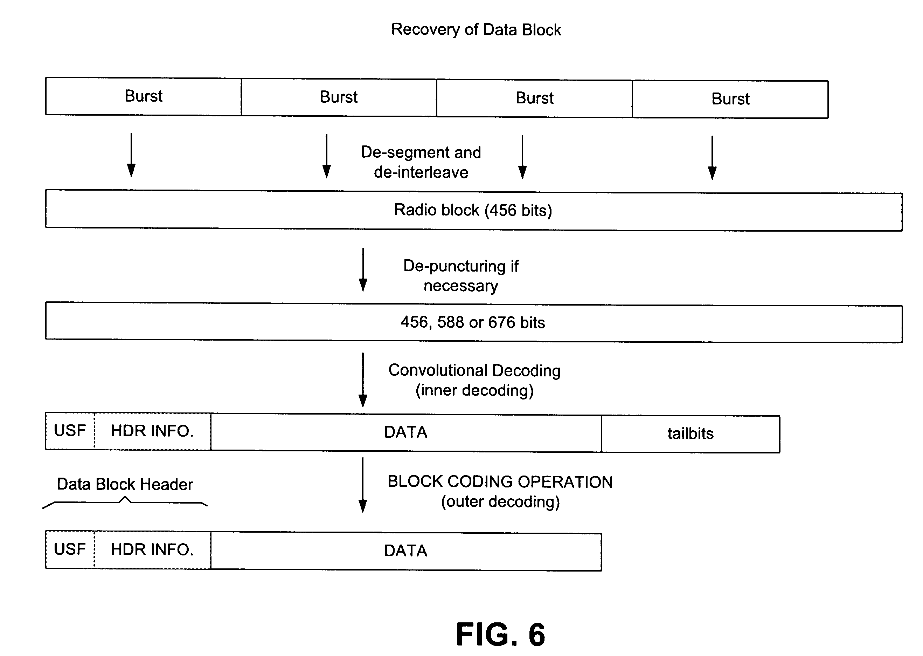

FIG. 6 is a block diagram depicting the various stages associated with recovering a data block from RF bursts. Four RF bursts making up a data block are received and processed. Once all four RF bursts have been received, the RF bursts are combined to form an encoded data block. The encoded data block is then depunctured (if required), decoded according to an inner decoding scheme, and then decoded according to an outer decoding scheme. For MCS 1-4, the decoded data block includes the data block header and the data, for MCS5-9, data block and header block are coded separately. Successful decoding may be signaled by appropriate tailbits appended to the data following convolutional decoding (error correction coding).

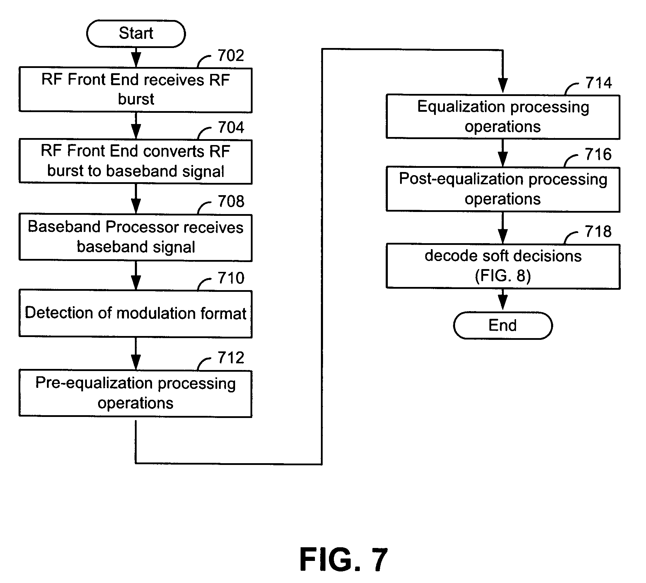

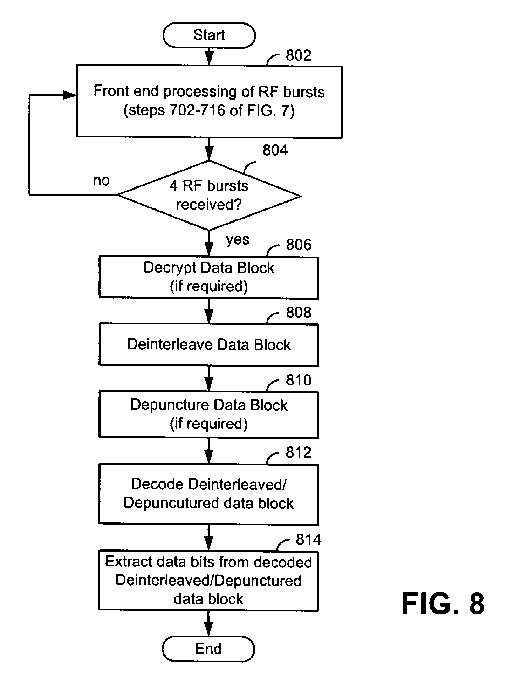

FIGs. 7 and 8 are flow charts illustrating operation of a wireless terminal 200 in receiving and processing RF bursts to recover a data block. The operations illustrated correspond to a single RF burst in a corresponding slot of GSM frame. The RF front end 202, the baseband processor 304, and the equalizer module 318 illustrated in FIG. 3 perform these operations. These operations are generally called out as being performed by one of these components. However, the split of processing duties among these various components may differ without departing from the scope of the present invention.

A single processing device or a plurality of processing devices operably coupled to memory performs the processing duties. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, cache memory, and/or any device that stores digital information. Note that when the processing duties are implemented via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry. The processing duties include the execution of operational instructions corresponding to at least some of the steps and/or functions may be described later.

Referring particularly to FIG. 7, operation commences with the RF front end 202 receiving an RF burst in a corresponding slot of a GSM frame (step 702). The RF front end 202 then converts the RF burst to a baseband signal (step 704). Upon completion of the conversion, the RF front end 202 stores the converted baseband signal. When needed the baseband processor samples the converted baseband signal from the RF front end. Thus, as referred to in FIG. 7, the RF front end 202 performs steps 702-704.

Operation continues with the baseband processor 304 receiving the baseband signal (step 708). In a typical operation, the RF front end 202, the baseband processor 304, or modulator/demodulator 322 samples the analog baseband signal to digitize the baseband signal. After receipt of the baseband signal (in a digitized format), the baseband processor 304 performs detection of a modulation format of the baseband signal (step 710). This detection of the modulation format determines the modulation format of the corresponding baseband signal. Proper determination of the modulation format is necessary in order to properly estimate the channel quality from the SNR of the channel. According to the GSM standard, the modulation format will be either Gaussian Minimum Shift Keying (GMSK) modulation or Eight Phase Shift Keying (8PSK) modulation. The baseband processor 304 makes the determination (step 712) and appropriately processes the RF bursts based upon the detected modulation format.

The baseband processor performs pre-equalization processing of the RF burst in step 712. The pre-equalization processing operations produce a processed baseband signal. Upon completion of these pre-equalization processing operations, the baseband processor 304 issues a command to the equalizer module 318.

The equalizer module 318, upon receiving the command, prepares to equalize the processed baseband signal based upon the modulation format, e.g., GMSK modulation or 8PSK modulation in step 714. The equalizer module 318 receives the processed baseband signal, settings, and/or parameters from the baseband processor 304 and equalizes the processed baseband signal.

After equalization, the equalizer module 318 then issues an interrupt to the baseband processor 304 indicating that the equalizer operations are complete for the RF bursts. The baseband processor 304 then receives the soft decisions from the equalizer module 318. Next, the baseband processor 304 performs "post-equalization processing" as shown in step 716. This may involve determining an average phase of the left and right sides based upon the soft decisions received from the equalizer module 318 and frequency estimation and tracking based upon the soft decisions received from the equalizer module 318.

The sequences of soft decisions are decoded in step 718 to produce the data bits containing the audio, video and data communications. One particular method of decoding the soft decisions is further detailed in FIG. 8. While the operations of FIG. 7 are indicated to be performed by particular components of the wireless terminal, such segmentation of operations could be performed by differing components. For example, the baseband processor 304 or system processor 302 in other embodiments could perform the equalization operations. Further, the baseband processor 304 or the system processor 302 in other embodiments could also perform decoding operations.

FIG. 8 is a flow chart illustrating operations to decode a data block. Operations commence with receiving and processing RF bursts (front-end processing of RF bursts) in step 802 and as described with reference to steps 702-716 of FIG. 7. After receiving the four RF bursts that complete an EDGE or GPRS data block, as determined at step 804, operation proceeds to step 806.

Data recovery begins in step 806 where, if necessary, the data block is decrypted. The data block is then de-interleaved (step 808) according to a particular format of the data block, e.g.. MCS-1 through MCS-9. The data block is then de-punctured (step 810). At step 812, the de-interleaved and de-punctured data block is decoded. Decoding operations may include combining previously received copies of the data block with the current copy of the data block. Data bits of the decoded data block are then processed further (step 814). These data bits may take the form of encoded video data to be displayed on the wireless terminal. FIGs. 9-19 address the decoding real time video communications contained with in forward link communications and encoding of real time video communications for reverse link communications.

FIG. 9 is a block diagram illustrating a video processing core engine 900 within a wireless terminal. Video processing core engine 900 may service MPEG4 video or any other like video encoding/decoding operations as well, e.g., JPEG, etc. MPEG4 is particularly suited to wireless video phones as MPEG4 allows a reasonable reproduction of the video frame with a relatively low data rate. Camera 902 and LCD 904 are built into the wireless terminal and correspond to LCD and Camera 332 of FIG. 3. Camera 902 and display 904 couple to video I/F 906, where video I/F 906 corresponds to video I/F 310 of FIG. 3. Pre-processing operations 908 and post-processing operations 910 may be performed by video I/F 906. The pre-processing includes format conversion such as UYVY format decimation from camera interface output to YUV12 format and also performs Noise reduction. Post processing functions include De-blocking, Up-scaling of the QCIF or CIF image to the required resolution of the display, Dithering, and/or Conversion from YUV12 format to RGB color format. Video encoder functions 912 and video decoder functions 914 may be performed by a video processor 916. Video processor 916 includes both dedicated hardware, such as the video interface 310, video processor accelerator 328 and motion co-processor 311, as shown in FIG. 3. The manner in which these duties are split will be described further.

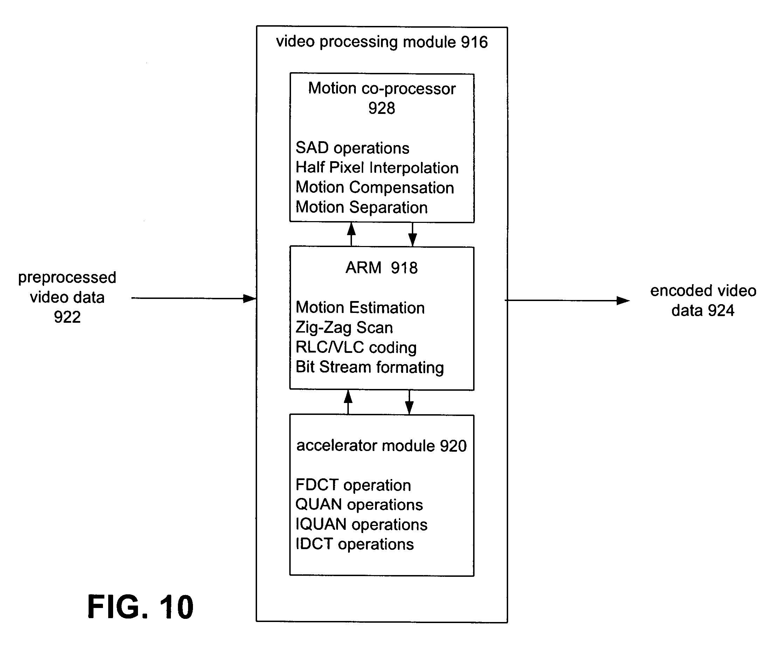

FIG. 10 is a block diagram illustrating encoding video processing operations of the video processing core engine 900 with particular emphasis on a division of processing duties within video processor 916. Here, the encoding of the preprocessed video data 922 video data is split between ARM 918, motion co-processor 928 and video accelerator module 920 to produce encoded video data 924. Similarly, ARM 918 may correspond to 302 of FIG. 3. In one embodiment the motion co-processor module 928 performs SAD (Sum of Absolute Difference) operations used in motion estimation and SAD averaging operations used in interpolation when performing the functions of motion compensation. Motion co-processor 928 may also perform half-pixel interpolation, motion compensation and motion separation between frames. Video accelerator module 920 performs Fast Discrete Cosine Transform (FDCT) operations,

Quantization (QUAN) operations, Inverse Quantization (IQUAN) operations, and Inverse Discrete Cosine Transform (IDCT) operations. The accelerator module may utilize dedicated arithmetic logic units (ALUs) to perform these tasks. The ARM 918 performs motion compensation operations, zigzag operations, Run Length Coding/Variable Length Coding (RLC/VLC) operations, and Bit stream formatting operations.

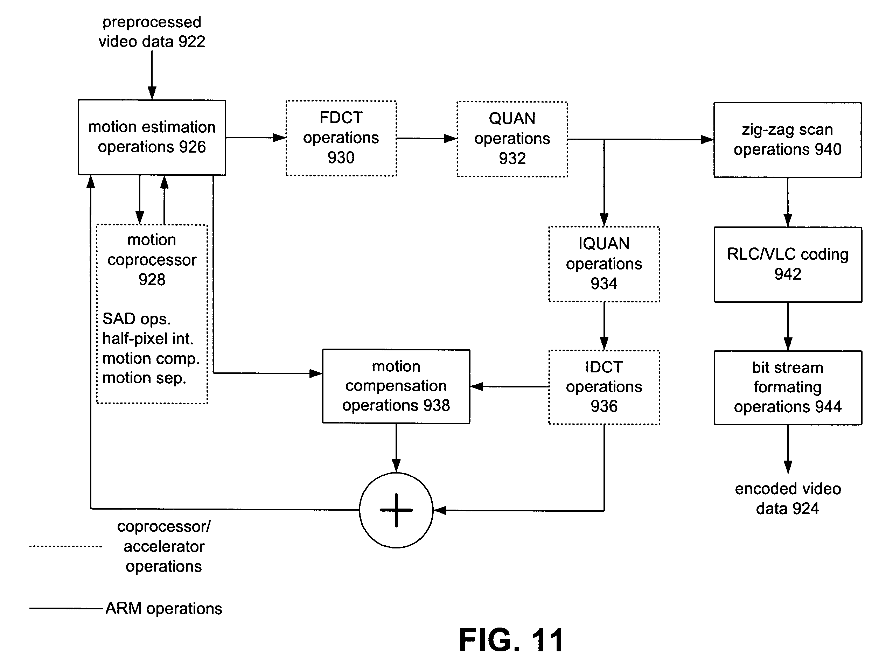

FIG. 11 details the process flow of preprocessed video data 922 within video processing module 916 to produce encoded video data 924. Here, motion estimation operations 926 are performed by ARM 918. This may involve a division between the ARM and a motion co-processor 928 which may perform sum of absolute difference operations, half-pixel interpolation, motion compensation and motion separation between frames. FDCT operations 930, QUAN operations 932, IQUAN operations 934, and IDCT operations 936 are performed by the video accelerator module 920. The output of the IDCT module is provided as an input for motion compensation operations 938. Additionally, the output of the QUAN operations 932 is an input for zigzag scan operations 940 and RLC/VLC coding operations 942, whose output is then formatted to produce a bit stream of encoded video data 924. Operations 940, 942, and 944 are all performed in this embodiment by ARM 918.

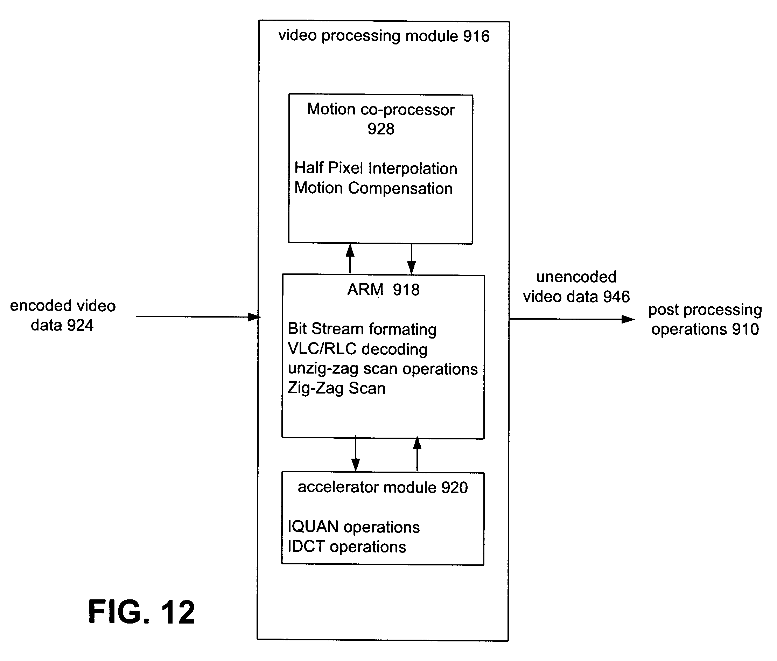

FIG. 12 is a block diagram illustrating decoding video processing operations of the video processing module 916 with particular emphasis on a split of processing duties. Here, the decoding of the encoded video data 924 video data is split between ARM 918, motion co-processor 928, and video accelerator module 920 to produce unencoded video data 940. The video accelerator module corresponds to video processor accelerator 328 of FIG. 3. Similarly, ARM 918 corresponds with processor 302 of FIG. 3. ARM 918 performs bit stream formatting operations, VLC/RLC decoding operations, Un-zigzag scan operations, and motion compensation. The video accelerator module 920 performs IQUAN operations and IDCT operations. Motion co-processor module 928 performs half-pixel interpolation and motion compensation.

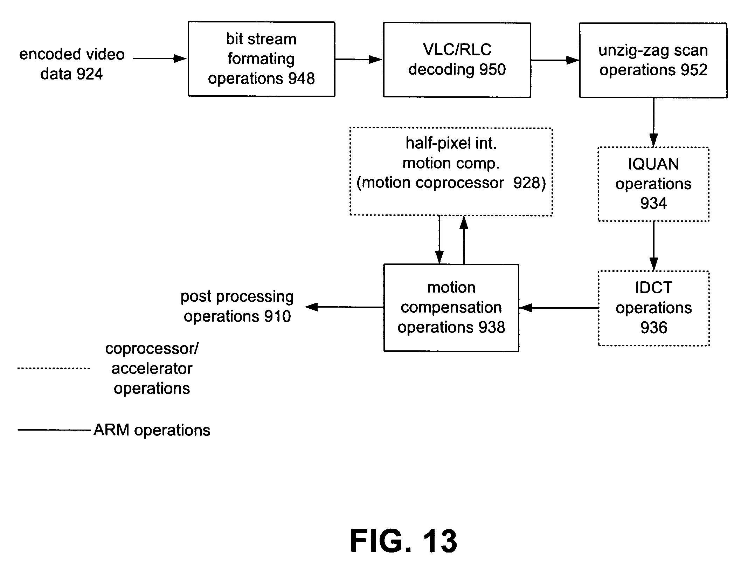

FIG. 13 is a block diagram illustrating the process flow of the decoding video processing operations and the division of those operations between an ARM and a video accelerator module. Encoded video data 924 is received by the video processing module 916 where ARM 918 first conducts bit stream formatting operations 948, VLC/RLC decoding operations 950, and unzigzag scan operations 952. IQUAN functions 934 and IDCT functions 936 are executed by video accelerator module 920. The output of the video accelerator module is then provided as an input for motion compensation operations 938 to produce an input for post-processing operations 910.

Both encoding and decoding may be performed at the macro-block level. In one embodiment, each macro-block contains 4 8X8 Y components, one 8X8 U components and one 8X8 V components. The driver of the video processing module performs reference macro-block generation, motion compensation in case of the inter-macro block encoding. The unit supports imaged-based motion compensation or half-pixel block-based compensation.

For quantization, the H.263 based simple uniform quantization scheme, MPEG4 based matrix quantization scheme, or other known schemes may be supported. The quantization parameter QP adjusts the quantization level. For example, QP may take integer values between 1 to 31. For matrix based quantization, an 8X8 quantization matrix can be either customized or a default matrix. Mis-match control may be performed prior to the de-quantization data being processed by the IDCT function. It may be based on the sum of all 64 de-quantized values and implemented within the IDCT module.

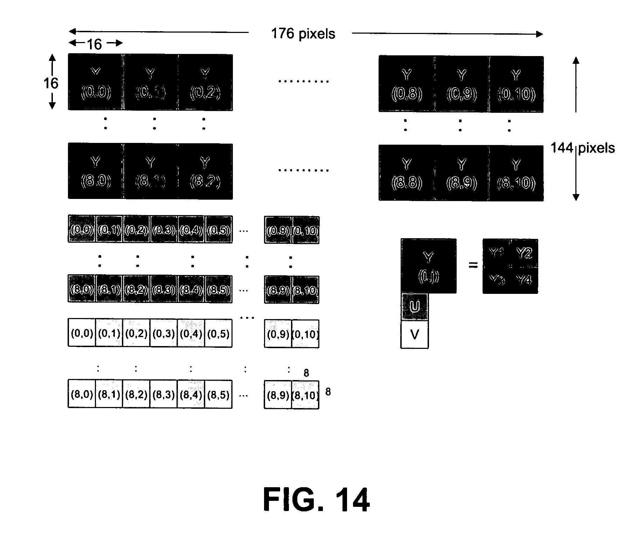

The image format and data structure of a captured QCIF frame may be described with reference to FIG. 14. The particulars of the data structure inform the video processing module which required operations are to be performed. For example, in one embodiment the video accelerator module is split into two phases of operation while performing the encoding operations described in FIG. 11, "phase 0" for FDCT operations 930 and QUAN operations 932 and "phase 1" for DQUAN operations 934 and IDCT operations 936. Thus, a *"Phase"* parameter within the data structure may be used to specify which mode of operation of video accelerator module 920 is requested.

At a macro-block level, each macro-block contains 4 luminance blocks Y0, Y1, Y2, Y3, two chrominance blocks U and V. Each block contains 8X8 pixel information. The pixels of the captured frame in YUV formats are store in the memory where an example of QCIF frame is used. Each macro-block is uniquely identified by its location (x_pos, y_pos) in the memory. The pixels of the corresponding Y luminance and the two chrominance blocks are identified by their individual starting memory address. For example if the memory addresses of the Y, U & V for the captured frame start at pY, pU and pV, respectively, then the address pointer for Y1-Y4, U, V blocks of the macro-block (x_pos, y_pos) are as follows:

- Y1:

$$pY + y\_pos * 16 * frame\_width + x\_pos * 16$$

- Y2:

$$pY + y\_pos * 16 * frame\_width + x\_pos * 16 + 8$$

- Y3:

$$pY + y\_pos * 16 * frame\_width + x\_pos * 16 + 8 * frame\_width$$

- Y4:

$$pY + y\_pos * 16 * frame\_width + x\_pos * 16 + 8 * frame\_width + 8$$

- U:

$$pU + y\_pos * 8 * \frac{frame\_width}{2} + x\_pos * 8$$

- V:

$$pV + y\_pos * 8 * \frac{frame\_width}{2} + x\_pos * 8$$

If motion estimation is performed on $\pm m$ pixels, then $frame\_width = actual\_captured\_frame\_width + 2 * m$.

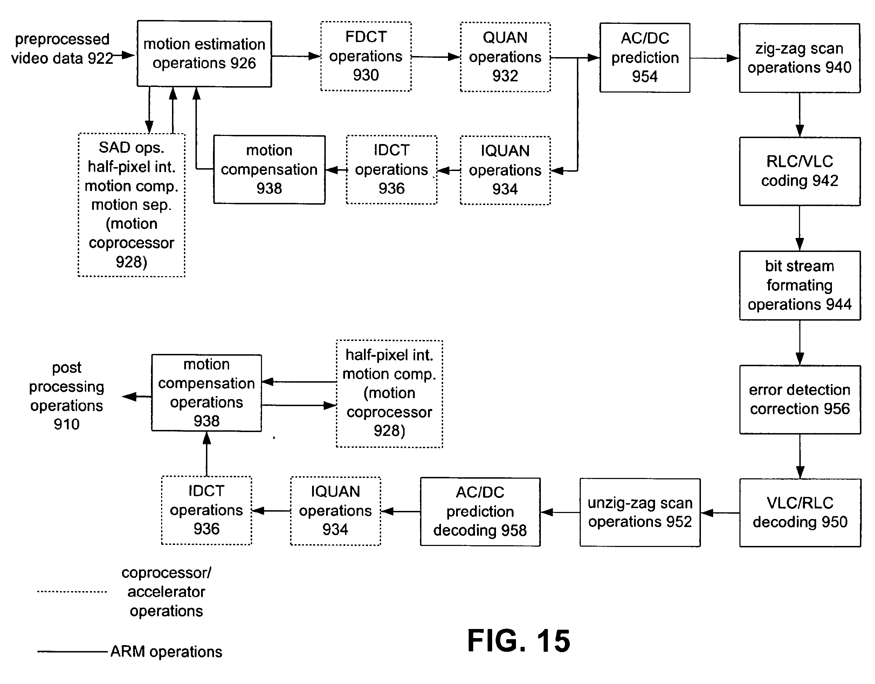

FIG. 15 is a block diagram illustrating both encoding and decoding video processing operations according to an embodiment of the present invention with particular emphasis on a split of processing duties between a video processor accelerator or motion co-processor and a video processor of the wireless terminal. The operations of FIG. 15 are performed in combination by the video processor accelerator 328, the motion co-processor 311, and/or the system processor 302 of FIG 3. Here preprocessed video data 922 is received and has motion estimation operations 926 performed by system processor 302 and the motion co-processor 311. FDCT operations 930 QUAN, operations 932 IQUAN, operations 934 and IDCT operations 936 that relate to the encoding of video data 922 are performed by video processor accelerator 328. AC/DC prediction 954, zigzag scan operations 940, run length coding/variable length coding operations 942, midstream formatting operations 944, error detection correction operations 956, variable length coding, run length coding decoding 950, unzigzag scan operations 952 and AC/DC prediction decoding 958 may be performed by system processor 302. Decoding operations IQUAN 934 and IDCT 936 as in the encoding side may be performed by accelerator 328. Motion compensation operations 938 are performed by motion co-processor 311 and the system processor 302 to produce post processing video data 910.

Interface control registers for the ARM are used to determine the mode of operation (FDCT/IDCT/ QUAN/ IQUAN) of the video accelerator. A configuration register may be used by the ARM to command the video accelerator to conduct a given mode of operation. While the accelerator is performing a given operation on a current Macro-block, ARM can simultaneously perform other operations on a previous Macro-block. Therefore, save overall encoding time for a given video frame compared to the encoding algorithm using complete software based solution

Writing to the configuration register triggers the DCT/IDCT/QUAN module of the video accelerator to process the data. The module performs the process as indicated by the contents of the configuration register. An interrupt may be issued when the video accelerator module completes this process. For example, in one embodiment one process averages approximately 3200 cycles at 78 MHz clock rate. If the high frequency of the interrupt (every 3200 cycles) causes problems, the ARM can ignore the interrupt and wait an arbitrary number of cycles while processing other tasks before retrieving the data.

The driver code is transparent to the user of the hardware accelerator. For example, in one embodiment an interface function that sets the values of the quantization matrix in the accelerator when MPEG4 quantization is used. If default quantization is employed, this function only needs to be called once within the encoder setup or decoder setup software. However, when a customized quantization matrix is used, then this function may need to be called more than once. When functioning as an MPEG4 encoder various parameters may be declared to pass/obtain relevant information to/from the accelerator. Prior to calling the interface function, the video processing module may allocate memory to the captured frame, and the output buffers that hold the quantization results.

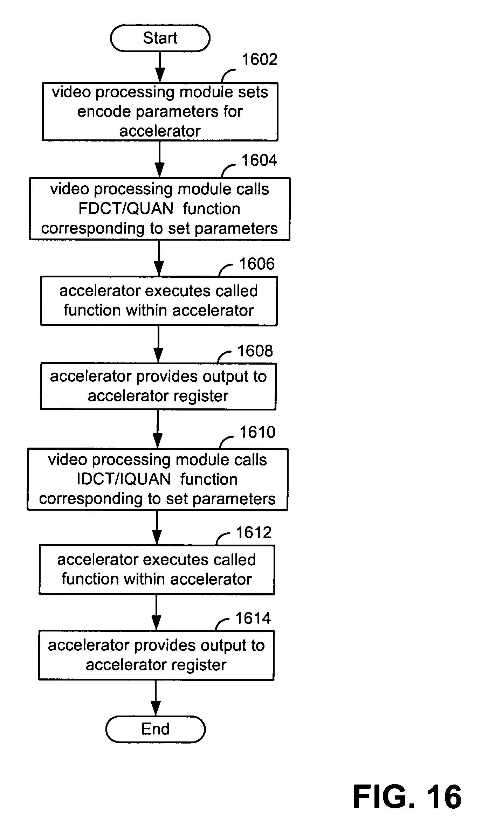

FIG. 16 provides a logic flow diagram illustrating the control procedures between the video processing module within the ARM and video accelerator during encoding of video data. These operations begin with the video processing module setting the encode parameters for the video accelerator module to perform FDCT/QUAN and IDCT/IQUAN operations on a macro block in step 1602. This involves setting the appropriate encode parameters for the accelerator. These parameters configure the accelerator to operate in a predetermined way. Then the video processing module calls the specified function corresponding to the set parameters in step 1604. The accelerator executes the called functions corresponding to the encode parameters within the dedicated accelerator hardware in step 1606. The results of this called function are then provided in an output accelerator register or designated memory location in step 1608. Concurrently to steps 1606 and 1608, the ARM of the video processing module is free to perform other tasks and then retrieve the results from the accelerator when needed. As discussed previously, the encode function of MPEG4 involves two phases. The first phase involving the FDCT and QUAN operations to be completed by the hardware accelerator. The second phase involves performing the IDCT and IQUAN functions. Thus, in step 1610 the video processing module having seen that the ARM has retrieved the results of the FDCT and QUAN operations will call the IDCT and IQUAN functions. As in steps 1606 and 1608, the accelerator will execute the called functions within the distinct accelerator hardware in step 1612 and when these functions are complete, store or output these results in step 1614. Concurrently with ARM of the video processing module is again free to perform other tasks and then retrieve the results. The encoder may then repeat these steps as needed.

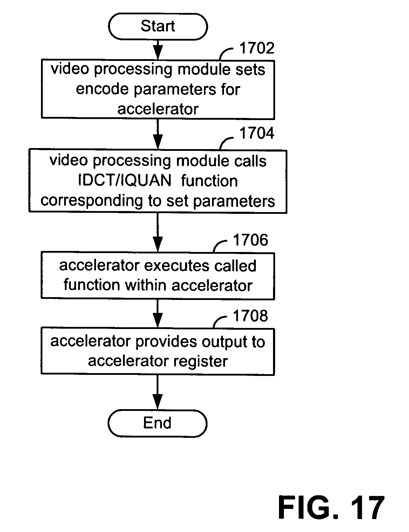

FIG. 17 supplies a logic flow diagram illustrating the decode process flow control procedures between the video processing module within the ARM and the video accelerator. This decode process flow is similar to the encode path described in FIG. 16. As previously stated, the video processing module in step 1702 sets the decode parameters for the accelerator. These parameters allow relevant information to be passed to the accelerator and then retrieved from the accelerator. It should be noted that while the accelerator executes called functions within the distinct dedicated accelerator hardware in step 1706 and provides the results of output in step 1708, the ARM should be utilized to execute other tasks. There is no second phase associated with the decode operations as was seen in FIG. 16.

As previously discussed, the accelerator module contains optimized hardware blocks for the acceleration of key compute intensive compression algorithms. These may be applied to both MPEG as well as JPEG standards. The only encoding/decoding difference between MPEG4 and H.263 quantization is in the quantization matrix loading and ¾ QP value in the configuration register. For MPEG4, input to the DCT is 9-bit signed for inter macro-block whereas for JPEG and MPEG4 intra macro-block, the input to the DCT is 8-bit unsigned integer. Both encoding and decoding are done at the macro-block level.

Since DCT/IDCT/QUAN module operates at macro-block level, each operation contains 4 luminance blocks Y0, Y1, Y2, Y3, one U and one V blocks. Each block contains 8X8 pixel information. For JPEG and MPEG4 intra macro-block forward DCT/QUAN and backward DEQUAN/IDCT operations, input of the forward and output of the backward are 8-bit unsigned integers. 4 words are packed into 32-bit words. The rest of the data formats are 9-bit signed integer where two words are put together into 32-bit word. Each 8X8 block is loaded to the specific memory address of the hardware accelerators that corresponds to the block. For example, memory address for Y0 is 0x00, Y1:0x20, Y2:0x40, Y3:0x60, U:0x80 and V: 0xa0

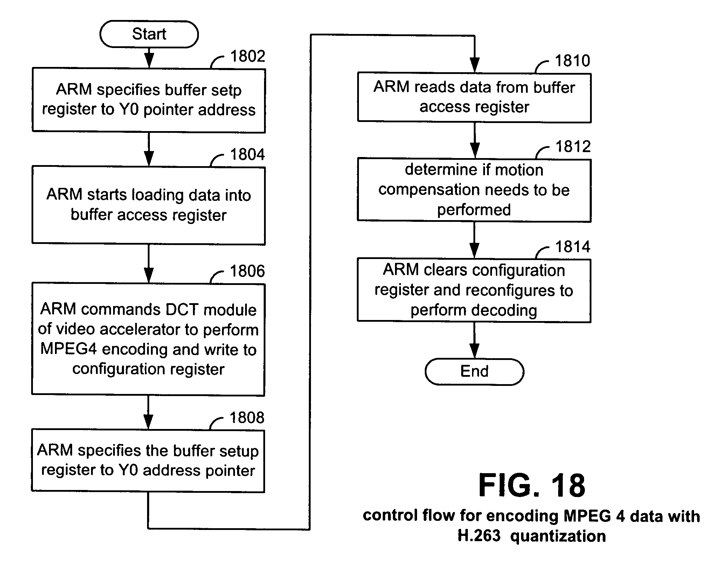

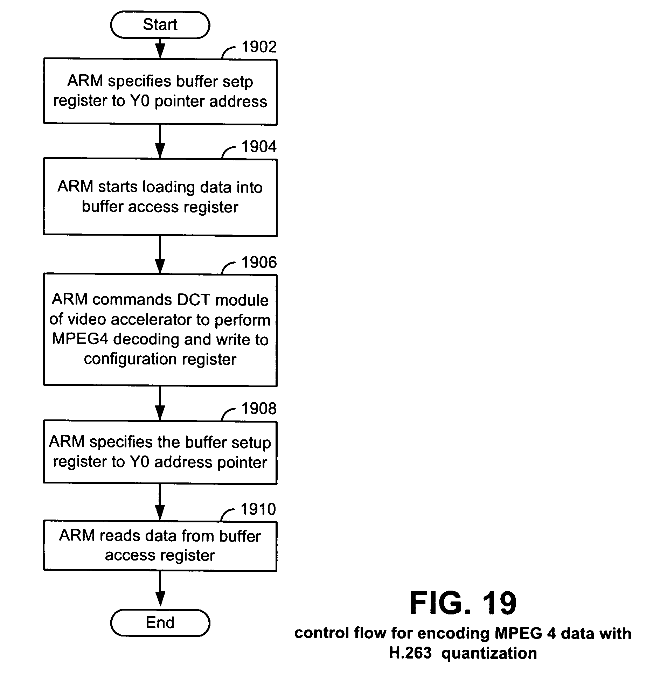

Figs. 18 and 19 provide logic flow diagram illustrating the control procedures between the video processing module within the ARM and video accelerator during encoding and decoding of MPEG 4 data utilizing the H.263 quantization scheme. FIG. 18 depicts the control flows during MPEG4 encoding according to the H.263 quantization scheme. Here in step 1802, the ARM specifies the buffer setup register to the Y0 address pointer prior to loading data to the accelerator. In step 1804, the ARM begins to load data into the buffer access register (Y0, Y1, Y2, Y3, U and V). Then in step 1806, the ARM commands the DCT module of the video accelerator to perform MPEG4 encoding with the H. 263 quantization scheme by writing relevant parameters to the appropriate bit locations of the configuration register. Then in step 1808, the ARM specifies the buffer setup register to the Y0 address pointer prior to reading results from the accelerator. Then following the specification of the buffer setup register to the Y0 address pointer, the ARM begins to read data from the buffer access register (Y0, Y1, Y2, Y3, U and V) in step 1810. This data will be passed for further encoding process for MPEG4. For inter macro-block operation, ARM reads bits on the configuration register which indicate when the sum of the absolute DCT output value is less than the given threshold for corresponding Y, U, or V blocks. This information is stored and then used to determine if motion compensation needs to be performed for the corresponding block by the current macro block in step 1812. Then the ARM clears the configuration register and reconfigures the configuration register to perform decoding with proper values set to the corresponding bit locations. This corresponds to the reconfiguration of the video accelerator previously discussed in relation to FIG. 12. Upon completion for intra macro block, the ARM specifies the buffer setup register to the Y0 address pointer and then reads the buffer access register (Y0, Y1, Y2, Y3, U, and V). For inter macro block operations, the ARM specifies to the buffer setup register and then reads data from the buffer access register for the rest of Blocks Y, U, and V. The ARM then reads the contents of the configuration register and determines if an encode/decode state mismatch problems exists.

FIG. 19 depicts the control flows during decoding of video data using the MPEG 4 standard with H.263 quantization scheme. In step 1902 the ARM specifies the buffer setup register to the Y0 pointer address. Then the ARM begins to load data into the buffer access register in step 1904. In step 1906, the ARM commands the DCT module of the video accelerator to perform MPEG4 decoding with the H.263 quantization scheme. Then in step 1908, the ARM specifies the buffer setup register to the Y0 address pointer. Following the specification of the buffer setup register to the Y0 address pointer, the ARM begins to read data from the buffer access register (Y0, Y1, Y2, Y3, U and V) in step 1910. The only encoding/decoding difference between MPEG4 and H.263 quantization is in the quantization matrix loading and ¾ QP value in the configuration register. For MPEG4, ARM needs to load the intra and inter quantization matrices into the DCT module prior to encode/decoding processes.

In summary, the present invention provides a video processor within a wireless terminal to process video information. This video processor may include the operable coupled combination of a processing module, video accelerator module and motion co-processor. This combination allows the compute intensive operations to be offloaded from the processing module onto the video accelerator and/or motion co-processor in order to improve the overall system efficiency. Such a combination may overcome the shortcomings of prior devices by utilizing a distinct and dedicated hardware video accelerator to support video compression and decompression within a wireless device.

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled". As one of average skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The foregoing description of a preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments and with various modifications as are suited to the particular use contemplated. It is intended that the scope of the invention be defmed by the claims appended hereto, and their equivalents.

**Claims**

1. A video processor within a wireless terminal, comprising:

   a video interface that receives incoming video information and that provides outgoing video information;
   a processing module operably coupled to the video interface;
   a video accelerator operably coupled to the processing module;
   a motion processing co-processor operably coupled to the processing module; and

   wherein processing of the incoming video information and the outgoing video information is performed by the combination of the processing module, video co-processor and the video accelerator module.

2. The video processor of Claim 1, wherein the motion co-processor performs Sum of Absolute Difference (SAD) operations, half-pixel interpolation, motion compensation, motion separation between interframes when encoding video information.

3. The video processor of Claim 1 or 2, wherein the motion co-processor performs half-pixel interpolation and motion compensation when decoding video information.

4. The video processor of Claim 1, 2, or 3, wherein the video accelerator module, when encoding video information, performs:

   Fast Discrete Cosine Transform (FDCT) operations;
   Quantization (QUAN) operations;

Inverse Quantization (IQUAN) operations; and
Inverse Discrete Cosine Transform (IDCT) operations.

**5.** A wireless terminal that comprises:

a Radio Frequency (RF) front end;
a baseband processor communicatively coupled to the RF front end;
a video input device to capture incoming video information;
a video display device to display outgoing video information;
a video interface that receives incoming video information and that provides outgoing video information; and
a video processor that further comprises:

a processing module operably coupled to the video interface;
a motion co-processor operably coupled to the processing module;
a video accelerator module operably coupled to the processing module; and

wherein processing of the incoming video information and the outgoing video information is performed by the combination of the processing module, motion co-processor and video accelerator module.

**6.** The wireless terminal of Claim 5, wherein the motion co-processor performs Sum of Absolute Difference (SAD) operations, half-pixel interpolation, motion compensation, motion separation between interframes when encoding video information.

**7.** The wireless terminal of Claim 5 or 6, wherein the motion co-processor performs half-pixel interpolation and motion compensation when decoding video information.

**8.** A method to process video information within a wireless terminal comprising:

receiving video information at a video processing engine;
determining a mode of operation of the video processing engine from a format of the video operation; and
dividing the processing of the video information between a processing module, motion co-processor and a video accelerator module.

**9.** The method of Claim 8, wherein the motion co-processor performs Sum of Absolute Difference (SAD) operations, half-pixel interpolation, motion compensation, motion separation between interframes when encoding video information.

**10.** The method of Claim 8 or 9, wherein the motion co-processor performs half-pixel interpolation and motion compensation when decoding video information.

**FIG. 1**

EP 1 526 736 A1

FIG. 2

216 FLASH RAM

218 SRAM/DRAM (IR MEMORY)

220 LCD

222 LED(s)

210 PC/DTE

212 KEYPAD

214 SIM CARD

DISPLAY/ CAMERA 322

334 AUDIO DAC

204

EXT. MEM. I/F 306

MMI DRIVERS AND I/F 308

VIDEO I/F 310

Motion Coprocessor 311

Video Proc. Accel 328

AUD. I/F 312

324 ROM   326 RAM

RISC/ SISC PROC. 302

332 MESS. PROC.

326 RAM   324 ROM

(BASEBAND PROCESSOR) DSP 304

316 AUX. FUNCTS.

BATT, VCXO, ETC.

318 EQUALIZER

330 ENCRYPT/ DECRYPT

320 ENCODE/ DECODE

322 MOD/ DEMOD

VOICE BAND CODEC - 314

202 RF front end

226

228

EP 1 526 736 A1

**FIG. 3**

Data block B = one segmented RLC block, one RLC block, or two RLC blocks

Data block A = one segmented RLC block, one RLC block, or two RLC blocks

slot 7
slot 6
slot 5
slot 4
slot 3
slot 2
slot 1
slot 0

20 ms GPRS block

4.615 ms GSM frame

Left Side | Midamble | Right Side

**FIG. 4**

20

FORMATION OF DOWNLINK
TRANSMISSIONS

Data Block Header

| USF | HDR INFO. | DATA |
|---|---|---|

BLOCK CODING
OPERATION (FIRE
CODE, CRC, ETC.)

BLOCK
CODE
SEQUENCE
(tailbits)

| USF | HDR INFO. | DATA | BCS |
|---|---|---|---|

Convolutional
Coding

| Coded block |
|---|

Puncturing

| Radio block |
|---|

Interleave and
Segment

*Optional
Encryption*

| Burst | Burst | Burst | Burst |
|---|---|---|---|

# FIG. 5

Recovery of Data Block

| Burst | Burst | Burst | Burst |

De-segment and
de-interleave

| Radio block (456 bits) |

De-puncturing if
necessary

| 456, 588 or 676 bits |

Convolutional Decoding
(inner decoding)

| USF | HDR INFO. | DATA | tailbits |

Data Block Header

BLOCK CODING OPERATION
(outer decoding)

| USF | HDR INFO. | DATA |

# FIG. 6

EP 1 526 736 A1

EP 1 526 736 A1

```
                    ┌─────────┐
                    │  Start  │
                    └────┬────┘
                         │         ┌── 702
                         ▼
              ┌──────────────────────┐
              │ RF Front End receives│
              │       RF burst       │
              └──────────┬───────────┘
                         │         ┌── 704
                         ▼
              ┌──────────────────────┐
              │ RF Front End converts│
              │ RF burst to baseband │
              │        signal        │
              └──────────┬───────────┘
                         │         ┌── 708
                         ▼
              ┌──────────────────────┐
              │ Baseband Processor   │
              │ receives baseband    │
              │       signal         │
              └──────────┬───────────┘
                         │         ┌── 710
                         ▼
              ┌──────────────────────┐
              │ Detection of         │
              │ modulation format    │
              └──────────┬───────────┘
                         │         ┌── 712
                         ▼
              ┌──────────────────────┐
              │ Pre-equalization     │
              │ processing operations│
              └──────────┬───────────┘
                         │
```

```
                                    ┌── 714
                         ▼
              ┌──────────────────────┐
              │ Equalization         │
              │ processing operations│
              └──────────┬───────────┘
                         │         ┌── 716
                         ▼
              ┌──────────────────────┐
              │ Post-equalization    │
              │ processing operations│
              └──────────┬───────────┘
                         │         ┌── 718
                         ▼
              ┌──────────────────────┐
              │ decode soft decisions│
              │      (FIG. 8)        │
              └──────────┬───────────┘
                         │
                         ▼
                    ┌─────────┐
                    │   End   │
                    └─────────┘
```

# FIG. 7

EP 1 526 736 A1

```
          ┌─────────┐
          │  Start  │
          └────┬────┘
               │         ╭─ 802
               ▼
   ┌───────────────────────────┐
   │ Front end processing of RF │
   │ bursts                     │
◀──│ (steps 702-716 of FIG. 7)  │
│  └────────────┬──────────────┘
│               │      ╭─ 804
│               ▼
│          ╱─────────╲
│    no   ╱  4 RF      ╲
└────────╱   bursts     ╲
         ╲   received?  ╱
          ╲───────────╱
               │  yes  ╭─ 806
               ▼
   ┌───────────────────┐
   │  Decrypt Data Block│
   │  (if required)     │
   └────────┬───────────┘
            │      ╭─ 808
            ▼
   ┌───────────────────┐
   │ Deinterleave Data  │
   │ Block              │
   └────────┬───────────┘
            │      ╭─ 810
            ▼
   ┌───────────────────┐
   │ Depuncture Data    │
   │ Block              │
   │ (if required)      │
   └────────┬───────────┘
            │      ╭─ 812
            ▼
   ┌───────────────────┐
   │ Decode Deinterleaved/│
   │ Depuncutured data  │
   │ block              │
   └────────┬───────────┘
            │      ╭─ 814
            ▼
   ┌───────────────────┐
   │ Extract data bits  │
   │ from decoded       │
   │ Deinterleaved/     │
   │ Depunctured        │
   │ data block         │
   └────────┬───────────┘
            │
            ▼
       ┌─────────┐
       │   End   │
       └─────────┘
```

**FIG. 8**

FIG. 9

video processing module 916

Motion co-processor
928

SAD operations
Half Pixel Interpolation
Motion Compensation
Motion Separation

ARM 918

Motion Estimation
Zig-Zag Scan
RLC/VLC coding
Bit Stream formating

accelerator module 920

FDCT operation
QUAN operations
IQUAN operations
IDCT operations

preprocessed
video data
922

encoded video
data 924

FIG. 10

preprocessed
video data 922

↓

motion estimation
operations 926

→ FDCT operations 930 → QUAN operations 932 → zig-zag scan operations 940

motion coprocessor 928

SAD ops.
half-pixel int.
motion comp.
motion sep.

→ motion compensation operations 938 ← IDCT operations 936 ← IQUAN operations 934

zig-zag scan operations 940 → RLC/VLC coding 942 → bit stream formating operations 944

⊕

encoded video data 924

·········· coprocessor/ accelerator operations

———— ARM operations

**FIG. 11**

video processing module 916

Motion co-processor
928

Half Pixel Interpolation
Motion Compensation

ARM 918

Bit Stream formating
VLC/RLC decoding
unzig-zag scan operations
Zig-Zag Scan

accelerator module 920

IQUAN operations
IDCT operations

encoded video
data 924

unencoded
video data 946

post processing
operations 910

**FIG. 12**

encoded video data 924

→ bit stream formating operations 948

→ VLC/RLC decoding 950

→ unzig-zag scan operations 952

→ IQUAN operations 934

→ IDCT operations 936

→ motion compensation operations 938

half-pixel int. motion comp. (motion coprocessor 928)

→ post processing operations 910

·········· coprocessor/ accelerator operations

———— ARM operations

**FIG. 13**

FIG. 14

FIG. 15

Start

1602

video processing module sets
encode parameters for
accelerator

1604

video processing module calls
FDCT/QUAN function
corresponding to set parameters

1606

accelerator executes called
function within accelerator

1608

accelerator provides output to
accelerator register

1610

video processing module calls
IDCT/IQUAN function
corresponding to set parameters

1612

accelerator executes called
function within accelerator

1614

accelerator provides output to
accelerator register

End

## FIG. 16

**FIG. 17**

Start

↓ 1702

video processing module sets encode parameters for accelerator

↓ 1704

video processing module calls IDCT/IQUAN function corresponding to set parameters

↓ 1706

accelerator executes called function within accelerator

↓ 1708

accelerator provides output to accelerator register

↓

End

Start

ARM specifies buffer setp
register to Y0 pointer address

— 1802

ARM starts loading data into
buffer access register

— 1804

ARM commands DCT module
of video accelerator to perform
MPEG4 encoding and write to
configuration register

— 1806

ARM specifies the buffer setup
register to Y0 address pointer

— 1808

ARM reads data from buffer
access register

— 1810

determine if motion
compensation needs to be
performed

— 1812

ARM clears configuration
register and reconfigures to
perform decoding

— 1814

End

# FIG. 18

**control flow for encoding MPEG 4 data with
H.263 quantization**

EP 1 526 736 A1

EP 1 526 736 A1

```
                    ┌─────────┐
                    │  Start  │
                    └────┬────┘
                         │          ╭ 1902
                         ▼
        ┌────────────────────────────────┐
        │   ARM specifies buffer setp     │
        │  register to Y0 pointer address │
        └────────────────┬────────────────┘
                         │          ╭ 1904
                         ▼
        ┌────────────────────────────────┐
        │   ARM starts loading data into  │
        │      buffer access register     │
        └────────────────┬────────────────┘
                         │          ╭ 1906
                         ▼
        ┌────────────────────────────────┐
        │    ARM commands DCT module      │
        │  of video accelerator to perform│
        │   MPEG4 decoding and write to   │
        │      configuration register     │
        └────────────────┬────────────────┘
                         │          ╭ 1908
                         ▼
        ┌────────────────────────────────┐
        │  ARM specifies the buffer setup │
        │  register to Y0 address pointer │
        └────────────────┬────────────────┘
                         │          ╭ 1910
                         ▼
        ┌────────────────────────────────┐
        │   ARM reads data from buffer    │
        │        access register          │
        └────────────────┬────────────────┘
                         │
                         ▼
                    ┌─────────┐
                    │   End   │
                    └─────────┘
```

# FIG. 19

**control flow for encoding MPEG 4 data with
H.263 quantization**

## EUROPEAN SEARCH REPORT

**European Patent Office**

**Application Number**

EP 04 02 4434

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 241 892 A1 (SIEMENS AKTIENGESELLSCHAFT) 18 September 2002 (2002-09-18) | 1-3,5-10 | H04N7/26 |
| A | * page 1, paragraph 1 - page 4, paragraph 29 * | 4 | |
| X | PIRSCH P ET AL: "VLSI ARCHITECTURES FOR VIDEO COMPRESSION-A SURVEY" PROCEEDINGS OF THE IEEE, IEEE. NEW YORK, US, vol. 83, no. 2, 1 February 1995 (1995-02-01), pages 220-246, XP000501242 ISSN: 0018-9219 | 1,2,4 | |
| A | * page 220, left-hand column, paragraph 1 - last paragraph * * page 224, left-hand column, last paragraph - page 224, right-hand column, paragraph 2; figure 5 * * page 238, left-hand column, last paragraph - page 244, left-hand column, last paragraph * | 3,5-10 | |
| X | US 5 448 310 A (KOPET ET AL) 5 September 1995 (1995-09-05) | 1,2,4 | |
| A | * abstract * * column 5, line 20 - column 8, line 51; figures 1,3 * * column 31, line 61 - line 65 * | 3,5-10 | **TECHNICAL FIELDS SEARCHED (Int.Cl.7)** H04N |
| X | EP 0 847 204 A2 (STMICROELECTRONICS, INC) 10 June 1998 (1998-06-10) | 1,8 | |
| A | * abstract * * column 9, last paragraph - column 16, paragraph 1; figure 2 * | 2-7,9,10 | |

-/--

The present search report has been drawn up for all claims

| Place of search | Date of completion of the search | Examiner |
|---|---|---|
| Berlin | 1 February 2005 | Heising, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 04 02 4434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | NISHITANI T ET AL: "AUDIO AND VIDEO COMPRESSION ON PROGRAMMABLE CHIPS FOR MOBILE COMMUNICATION" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY : IEEE, US, vol. VOL. 4, 5 December 1999 (1999-12-05), pages 2022-2029, XP000951337 ISBN: 0-7803-5797-3 * abstract * * page 2027, right-hand column, last line - page 2028, left-hand column, line 20 * ----- | 1-10 | |
| A | FAIRFIELD D J: "A MULTI-STANDARD VIDEO CODEC ARCHITECTURE FOR THE ISA/VL BUS" PROCEEDINGS OF THE INTERNATIONAL CONFERENCE ON SIGNAL PROCESSING APPLICATIONS AND TECHNOLOGY, vol. 2, 18 October 1994 (1994-10-18), pages 1173-1178, XP000602802 * the whole document * ----- | 1-10 | TECHNICAL FIELDS SEARCHED (Int.Cl.7) |

The present search report has been drawn up for all claims

| Place of search | Date of completion of the search | Examiner |
|---|---|---|
| Berlin | 1 February 2005 | Heising, G |

EPO FORM 1503 03.82 (P04C01)

**ANNEX TO THE EUROPEAN SEARCH REPORT
ON EUROPEAN PATENT APPLICATION NO.**

EP 04 02 4434

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2005

| Patent document cited in search report | | Publication date | Patent family member(s) | | Publication date |
|---|---|---|---|---|---|
| EP 1241892 | A1 | 18-09-2002 | NONE | | |
| US 5448310 | A | 05-09-1995 | AU | 6713494 A | 21-11-1994 |
| | | | DE | 69431953 D1 | 06-02-2003 |
| | | | DE | 69431953 T2 | 06-11-2003 |
| | | | EP | 0696405 A1 | 14-02-1996 |
| | | | JP | 3180251 B2 | 25-06-2001 |
| | | | JP | 8511919 T | 10-12-1996 |
| | | | SG | 48393 A1 | 17-04-1998 |
| | | | WO | 9426069 A1 | 10-11-1994 |
| | | | US | 5510857 A | 23-04-1996 |
| EP 0847204 | A2 | 10-06-1998 | US | 5920353 A | 06-07-1999 |
| | | | JP | 10248067 A | 14-09-1998 |

For more details about this annex : see Official Journal of the European Patent Office, No. 12/82